# EUROPEAN PATENT APPLICATION

(11) **EP 4 383 070 A1**
(43) Date of publication of application: **12.06.2024**
(21) Application number: 23746105.8
(22) Date of filing: 17.01.2023
(51) Int. Cl.: G06F 9/451

(54) **PAGE PROCESSING METHOD, APPARATUS, DEVICE, AND STORAGE MEDIUM**

(30) Priority: 29.01.2022 CN 202210112796
(71) Applicant: Beijing Zitiao Network Technology Co., Ltd., Beijing 100190 (CN)
(72) Inventor: LI, Chenhao, Beijing 100086 (CN); CHE, Xin, Beijing 100086 (CN); LI, Yuhan, Beijing 100086 (CN); WANG, Tingting, Beijing 100086 (CN); SHI, Yongbiao, Beijing 100086 (CN); DUAN, Yunshan, Beijing 100086 (CN)
(74) Representative: Dentons UK and Middle East LLP
(86) International application number: PCT/CN2023/072512
(87) International publication number: WO 2023/143223

(57) **Abstract**

Embodiments of the present disclosure disclose a page processing method, an apparatus, a device, and a storage medium. The method comprises: displaying a first personal homepage of a first user in a preset application program, wherein a currently logged in identity of the preset application program is consistent with the first user, and the first personal homepage comprises a first presentation area and a second presentation area; displaying in a first sub-area of the first presentation area the user identifier of the first user, displaying in a second sub-area of the first presentation area an entry of a first function in a first function set, displaying in the second presentation area information associated with multimedia content published by the first user and displaying an entry of a second function in a second function set, wherein the second sub-area is invisible to a second user when the second user accesses the first personal homepage.

## Description

This application claims the benefit of priority to Chinese Patent Application No. 202210112796.4, filed with the Chinse Patent Office on January 29, 2021, the entire contents of which are incorporated herein by reference.

### TECHNICAL FIELD

Embodiments of the present disclosure relate to the field of computer technology, and for example, to a page processing method, an apparatus, a device, and a storage medium.

### BACKGROUND

With the continuous development of Internet technology, functions in an application (APP) have been enriched increasingly. The application is generally provided with personal homepages of users that can be browsed by other users as visitors . Entries can be provided for various functions in the personal homepages of the users; as a result of limited page display space and increasingly more functions, the current page layout is in disorder, and it is hard for the users to quickly find an entry of a function to be used, resulting in inefficient operation.

### SUMMARY

The embodiments of the present disclosure provide a page processing method, an apparatus, a storage medium, and a device, capable of optimizing page processing solutions for the personal homepage in the related art.

In a first aspect, an embodiment of the present disclosure provides a page processing method, comprising:
displaying a first personal homepage of a first user in a preset application, wherein a currently logged in identity of the preset application is consistent with the first user, and the first personal homepage comprises a first presentation area and a second presentation area which do not overlap; and
displaying in a first sub-area in the first presentation area a user identifier of the first user, displaying in a second sub-area in the first presentation area an entry of a first function in a first function set, displaying in the second presentation area information associated with multimedia content published by the first user and displaying an entry of a second function in a second function set, wherein the first function set and the second function set do not overlap, the second sub-area is invisible to a second user when the second user accesses the first personal homepage, and the second user is different from the first user.

In a second aspect, an embodiment of the present disclosure provides a page processing apparatus, comprising:
a homepage display module configured to display a first personal homepage of a first user in a preset application, wherein a currently logged in identity of the preset application is consistent with the first user, and the first personal homepage comprises a first presentation area and a second presentation area which do not overlap; and
a display module configured to display in a first sub-area in the first presentation area a user identifier of the first user, display in a second sub-area in the first presentation area an entry of a first function in a first function set, display in the second presentation area information associated with multimedia content published by the first user and display an entry of a second function in a second function set, wherein the first function set and the second function set do not overlap, the second sub-area is invisible to a second user when the second user accesses the first personal homepage, and the second user is different from the first user.

In a third aspect, an embodiment of the present disclosure provides an electronic device, comprising a memory, a processor, and a computer program stored on the memory and executable on the processor, wherein the processor, when executing the computer program, implements the page processing method provided in the embodiment of the present disclosure.

In a fourth aspect, the present disclosure provides a computer-readable storage medium having a computer program stored thereon, wherein the program, when executed by a processor, implements the page processing method provided in the embodiment of the present disclosure.

### BRIEF DESCRIPTION OF THE DRAWINGS

Fig. 1 is a schematic flow diagram of a page processing method according to an embodiment of the present disclosure;
Fig. 2 is a schematic diagram of a first personal homepage according to an embodiment of the present disclosure;
Fig. 3 is a schematic diagram of another first personal homepage according to an embodiment of the present disclosure;
Fig. 4 is a schematic diagram of a personal homepage in the related art;
Fig. 5 is a schematic flow diagram of a page processing method according to an embodiment of the present disclosure;
Fig. 6 is a schematic diagram of another first personal homepage according to an embodiment of the present disclosure;
Fig. 7 is a block diagram of a page processing apparatus according to an embodiment of the present disclosure;
Fig. 8 is a block diagram of an electronic device according to an embodiment of the present disclosure.

### DETAILED DESCRIPTION

The embodiments of the present disclosure will be described in more detail below with reference to the accompanying drawings.

It should be understood that various steps recited in method implementations of the present disclosure may be performed in a different order, and/or performed in parallel. Furthermore, the method implementations may include additional steps and/or omit performing the illustrated steps. The scope of the present disclosure is not limited in this respect.

The term "comprise" and the variations thereof used herein are intended to be open-ended, i.e., "comprising but not limited to" . The term "based on" is "at least partially based on". The term "one embodiment" means "at least one embodiment"; the term "another embodiment" means "at least one other embodiment"; and the term "some embodiments" means "at least some embodiments". Definitions related to other terms will be given in the following description.

It should be noted that the concepts "first", "second", and the like mentioned in the present disclosure are only used for distinguishing different devices, modules or units, and are not used for limiting the order or interdependence of functions performed by the devices, modules or units.

It should be noted that modifications of "one" or "a plurality" mentioned in this disclosure are intended to be illustrative rather than restrictive, and that those skilled in the art should appreciate that they should be understood as "at least one" unless otherwise explicitly stated in the context.

Names of messages or information exchanged between a plurality of devices in the embodiments of the present disclosure are for illustrative purposes only, and are not intended to limit the scope of the messages or information.

In the embodiments described below, optional features and examples are provided in each embodiment, and the features described in the embodiment may be combined to a plurality of optional solutions, so that each numbered embodiment should not be regarded as only one technical solution.

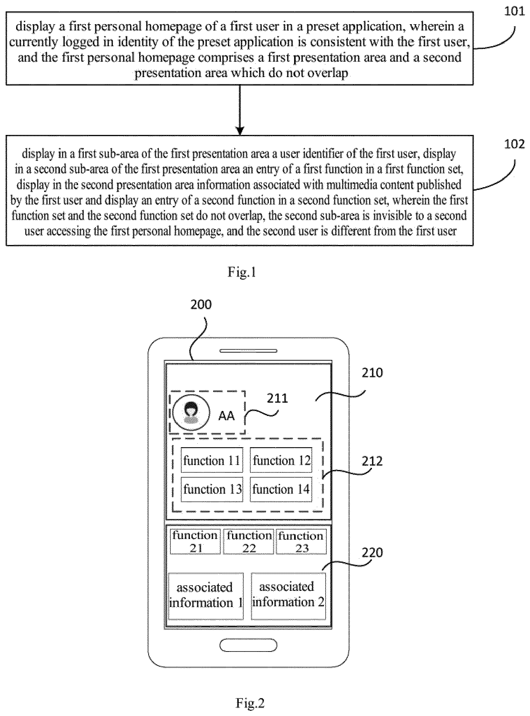

Fig. 1 is a schematic flow diagram of a page processing method according to an embodiment of the present disclosure, where the method can be executed by a page processing apparatus, wherein the apparatus may be implemented by software and/or hardware, and may be generally integrated in an electronic device. The electronic device may be a mobile device such as a mobile phone, an intelligent watch, a tablet computer, and a personal digital assistant; and may also be another device such as a desktop computer. As shown in Fig. 1, the method comprises:
step 101, displaying a first personal homepage of a first user in a preset application, wherein a currently logged in identity of the preset application is consistent with the first user, and the first personal homepage comprises a first presentation area and a second presentation area which do not overlap.

In the embodiment of the present disclosure, a type of the preset application is not limited, which may be, for example, a social-type application, an instant-messaging-type application, a video-type application, a live-streaming-type application, or the like, and may also be an other-type application. A user may register an account in the preset application and log in.

In the preset application, rich functions can be provided for the user to use. Exemplarily, the functions may include, for example, listening to music, playing a game, entering an applet, group chat, information recommendation, live streaming, and the like. The preset application is provided with a personal homepage, where entries of various functions can be displayed, information such as the user identifier which may, for example, include a nickname or an avatar of the user, can also be displayed, and information published by the user can also be displayed. The entry of the function can be displayed in a form of a control or the like, which facilitates the user to enter or use the corresponding function by triggering the entry, for example, entering a page of the function corresponding to the entry.

In the embodiment of the present disclosure, the first user may be understood as a user being using the preset application currently, wherein the first user may log in the preset application using an account registered by himself, so that in this case, the currently logged in identity of the preset application is consistent with the first user. The first personal homepage is a personal homepage of the first user, that is, this corresponds to an application scenario where the first user views his own personal homepage by the preset application, and in this case, a display state of the first personal homepage may be referred to as a host state.

In the embodiment of the present disclosure, the first personal homepage is provided with the first presentation area and the second presentation area, which do not overlap, that is, there is not an overlapping area between the first presentation area and the second presentation area. Shapes, sizes, and positions in the first personal homepage of the first presentation area and the second presentation area are not limited. Fig. 2 is a schematic diagram of a first personal homepage according to an embodiment of the present disclosure, wherein the display state is a host state; as shown in Fig. 2, a first personal homepage 200 comprising a first presentation area 210 and a second presentation area 220.

Step 102, displaying in a first sub-area of the first presentation area a user identifier of the first user, displaying in a second sub-area of the first presentation area an entry of a first function in a first function set, displaying in the second presentation area information associated with multimedia content published by the first user and displaying an entry of a second function in a second function set, wherein the first function set and the second function set do not overlap, the second sub-area is invisible to a second user accessing the first personal homepage, and the second user is different from the first user.

Exemplarily, in the process of using the preset application by the user, he can access a personal homepage of someone else to view content displayed therein. In the embodiment of the present disclosure, a user who can access the first personal homepage of the first user, denoted as the second user, may also be understood as a visitor to the first personal homepage, and for the second user, a display state of the first personal homepage that he views may be referred to as a guest state.

In the related art, functions provided by an application are not classified, and entries of various functions are displayed in a same presentation area altogether, so that it is hard for a user to quickly find an entry of a function he wants to use, resulting in inefficient operation.

In the embodiment of the present disclosure, for the functions provided by the preset application, classification into different types may be made according to different participating subjects. Exemplarily, functions needing no participation of the second user are classified as first-type functions, and functions needing participation of the second user are classified as second-type functions. For example, for the above functions of listening to music, playing a game, and entering an applet, use of these functions is a personal behavior of the first user and needs no participation of the second user; and for another example, for the above functions of group chat, information recommendation, and live streaming, the first user may create and manage the group chat, publish recommendation information, start the live streaming, and the like, and the second user needs to join a group chat session created by the first user, view information recommended by the first user, and view live streaming dynamics of the first user by means of corresponding functions, that is, these functions need participation of the second user. For the first-type functions, since they need configuration or editing by the first user himself, they do not need to be seen by the second user; in the embodiment of the present disclosure, classification in the above manner can be made, and the two types of functions are respectively displayed in different presentation areas, so that the layout of the entries of the functions is more reasonable, and the user is facilitated to quickly find the function he wants to use.

In the embodiment of the present disclosure, the first function set may be understood as a set of the first-type functions needing to be displayed in the first presentation area currently, the functions in the first function set are denoted as first functions, and the first function set corresponds to the first-type functions described above; due to a potentially large number of the first-type functions available in the preset application and limited display area in the personal homepage, all or part of the first-type functions can be displayed, and a number of the first functions included in the first function set is not limited but can be set according to actual needs or dynamically determined according to the current scenario. The second function set may be understood as a set of the second-type functions needing to be displayed in the second presentation area currently, the functions in the second function set are denoted as second functions, and the second function set correspond to the second-type functions described above; similarly, all or part of the second-type functions can be displayed. The first function set and the second function set respectively correspond to the first-type functions and the second-type functions, and are different in visibility to the second user, so that they are set to not overlap.

In the embodiment of the present disclosure, the first presentation area is divided to include a first sub-area and a second sub-area, the user identifier of the first user is displayed in the first sub-area, the entry of the first function is displayed in the second sub-area, the second sub-area is set to be invisible to the second user accessing the first personal homepage, that is, the entry of the first function displayed in the second sub-area is invisible to the second user, and the user identifier of the user himself and the functions invisible to others are displayed in a same area.

In the embodiment of the present disclosure, shapes, sizes, positions in the first presentation area, and the like of the first sub-area and the second sub-area are not limited. Exemplarily, as shown in Fig. 2, a first presentation area 210 includes a first sub-area 211 and a second sub-area 212, the first sub-area 211 having a first user's avatar and nickname "AA" displayed therein, the second sub-area 212 having 4 first functions displayed therein, and the second presentation area 220 having 3 second functions displayed therein.

According to the embodiment of the present disclosure, in the preset application, the user is allowed to share information with other users by publishing multimedia content. A form of the multimedia content is not limited, which may be, for example, text, image, video, or the like. The information associated with the multimedia content published by the first user may be displayed in the first personal homepage. The associated information may include the multimedia content itself or summary information of the multimedia content, which may be determined depending on the form. For example, the multimedia content is a video, and the associated information may be a video cover or a video frame screen in the video. In the embodiment of the present disclosure, the information associated with the multimedia content published by the first user is displayed in the second presentation area. That is, the information associated with the multimedia content published by the first user is displayed in the second presentation area together with the second functions. Such setting has the advantage that, since the first user, after actively publishing the multimedia content, generally hopes that other users can pay attention to the published content, the visibility of the multimedia content to the second user is clear; displaying the second function and the information associated with the multimedia content in the same presentation area, with the visibility of the two being consistent, makes it convenient for the first user to know that the function displayed in the second presentation area is visible to the second user, so that the function layout is reasonable, and the display division is clear.

Optionally, more information visible to the second user may be displayed in the second presentation area, such as profile information actively set by the first user, the number of users following the first user, a follow control for inputting a follow operation, likes of the published multimedia content, etc.

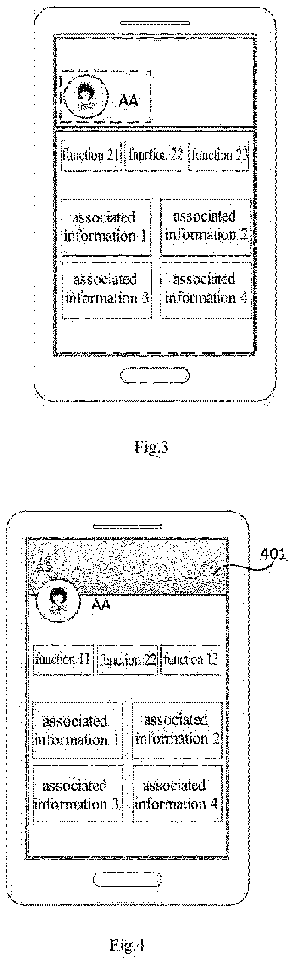

Exemplarily, Fig. 3 is a schematic diagram of another first personal homepage according to an embodiment of the present disclosure, wherein the display state is a guest state; as can be learned by comparing with the first personal homepage in the host state in Fig. 2, the second sub-area 212 is not visible to the second user, and the 4 first functions are hidden accordingly. It should be noted that Fig. 2 and Fig. 3 are only schematic illustrations, and other differences may exist between the first personal homepages in the host and guest states, which is not limited.

The page processing solution provided in the embodiment of the present disclosure comprises: displaying a first personal homepage of a first user in a preset application, wherein a currently logged in identity of the preset application is consistent with the first user, and the first personal homepage comprises a first presentation area and a second presentation area which do not overlap; and displaying in a first sub-area in the first presentation area a user identifier of the first user, displaying in a second sub-area in the first presentation area an entry of a first function in a first function set, displaying in the second presentation area information associated with multimedia content published by the first user and displaying an entry of a second function in a second function set, wherein the first function set and the second function set do not overlap, and the second sub-area is invisible to a second user when the second user accesses the first personal homepage. By use of the above technical solution, a function invisible to others and a function visible to others are respectively displayed in different areas, which facilitates the user to quickly position a function he wants to use when viewing his own personal homepage, so that the operation efficiency is improved, and by displaying the user identifier of the user himself and the function invisible to others in a same area, and displaying the information associated with the multimedia content published by the user and the function visible to others in a same area, clear display division of the functions with different visibility is enabled, so that the function layout in the personal homepage is reasonable.

In some embodiments, the method may further comprise: receiving a first setting operation for the first function set that is input by the first user, and performing a corresponding first adjustment operation on the first function contained in the first function set according to the first setting operation, wherein the first adjustment operation comprises at least one of addition adjustment, deletion adjustment, or display position adjustment. Such setting has the advantage that, the user is allowed to personalize customized setting on the function displayed in the second sub-area, so that a function often used by the user himself can be added into the first function set for display in his own personal homepage, or a function not often used recently by the user himself can be deleted from the first function set, to reduce occupation by unnecessary functions on the second sub-area, or the layout (i.e., display positions) of the first functions can be adjusted, for example, a most often used function is placed to a first position, thereby facilitating the user quickly finding the function he wants to use.

In some embodiments, the method may further comprise: receiving a second setting operation for the second function set that is input by the first user, and performing a corresponding second adjustment operation on the second function contained in the second function set according to the second setting operation, wherein the second adjustment operation comprises at least one of addition adjustment, deletion adjustment, or display position adjustment. Such setting has the advantage that, the user is allowed to personalize customized setting on the function displayed in the second presentation area.

In some embodiments, the method further comprises: obtaining a historical operation that is input by the first user for a candidate function in a candidate function set, and under the condition that it is determined that a historical operation corresponding to a target candidate function meets a preset condition, adding the target candidate function to the first function set. The candidate function set may be understood as a difference set between a set of the first-type functions that the first user can use and the first function set. Such setting has the advantage that, according to a historical operation of the first user for a first-type function which is not in the first function set, a first-type function meeting a certain condition can be automatically added to the first function set, which reduces active operations of the first user, and enables intelligent adjustment of the functions displayed in the second sub-area.

The historical operation corresponding to the candidate function may be understood as an operation associated with a candidate function that was ever input by the user, for example, a collection operation, a browse operation, a forward operation, and a like operation for an object associated with the candidate function. Exemplarily, the preset condition may be set according to a type of the historical operation, a frequency of the historical operation, an association degree between the historical operation and the candidate function, and the like. For example, taking a function of listening to music as an example, if the user has recently collected a large number of songs, multiple song collection operations can be received, and when the number of receptions reaches a preset number threshold, it can be considered that the preset condition is met, and the function of listening to music is automatically added into the first function set, so that after the first user enters the first personal homepage, an entry of the function of listening to music can be found in the second sub-area, which achieves the purpose of quickly listening to songs, thereby improving the interaction efficiency.

In some embodiments, the adding the target candidate function to the first function set comprises: determining whether the number of the first functions in the first function set has reached a preset number threshold; and based on the determination that the number of the first functions in the first function set has reached the preset number threshold, displaying preset prompt information, wherein the preset prompt information is used for prompting the first user whether to replace one first function in the first function set with the target candidate function; and receiving confirmation information that is input by the first user for the preset prompt information, to replace the one first function in the first function set with the target candidate function. Such setting has the advantage that, a maximum number of the entries of the functions which can be displayed in the second sub-area can be preset, when the candidate function needs to be added automatically, if the maximum number has been reached, the user can be prompted to inquire whether to replace one existing first function, which avoids the case where a first function which the user originally wants to retain cannot be displayed due to direct replacement and then inconvenience is brought to the user. When the user confirms the need for replacement, the first function that needs to be replaced can be actively selected by the first user. Optionally, after determining whether the number of the first functions in the first function set has reached a preset number threshold, in response that the number of the first functions in the first function set has not reached the preset number threshold, the target candidate function is added to the first function set.

In some embodiments, the method further comprises: in response to a folding operation for the second sub-area that is input by the first user, hiding the entry of the first function and reducing a display area of the second sub-area, and displaying an unfold control corresponding to the second sub-area, the unfold control being used for inputting an unfolding operation for the second sub-area. Such setting has the advantage that, the display mode of the second sub-area can be controlled more flexibly, and after the folding operation is received, the entry of the first function is hidden and the display area of the second sub-area is reduced (the degree of reduction is not limited, and may include reducing to 0, that is, not displaying the second sub-area), so that more areas can be set aside in the first personal homepage for displaying other information.

In some embodiments, a background image may be displayed in the personal homepage. In the related art, the background image is uploaded by a user, and is directly displayed at the top of the personal homepage after the image uploaded by the user being cropped or zoomed. Fig. 4 is a schematic diagram of a personal homepage in the related art, where a background image 401 is displayed at the top of the personal homepage; due to increasingly more content that needs to be displayed in the personal homepage, for example, increasingly more entries of functions, a height of a display area of the background image needs to be continuously compressed, thereby squeezing the personalized display of the background image of the user, and a segmentation boundary between the background image and other content is obvious, so that the user lacks immersion when viewing the personal homepage, resulting in poor page browsing experience.

In some embodiments, the method further comprises: displaying in the first presentation area a background image, wherein the background image is determined according to a target image uploaded by the first user, a display area of the target image being less than that of the background image, a color of a display area other than the target image in the background image being matched with that of the target image, and the display area of the target image and the second sub-area not overlapping. The user identifier of the first user, the entry of the first function, and the like are displayed above the background image. As shown in Fig. 2, a background image (not shown) is displayed in the first presentation area 210, and compared with Fig. 4, it can be seen that such setting in the embodiment of the present disclosure has the advantage that, the background image is displayed throughout the entire first presentation area, so that the height of the display area of the background image is increased; the background image further includes the display area matched with the color of the target image in addition to the image content of the target image, which provides more personalized page spaces for the user, increases the immersion of the user when viewing the personal homepage, and improves the page browsing experience; moreover, the display area of the target image and the second sub-area do not overlap, so that the display of the entry of the first function will not shield the content of the target image, ensuring the full display of the content of the target image.

In some embodiments, the background image comprises a solid color layer, the target image and a gradient layer with consistent widths and overlapping upper boundaries that are superposed in this order from bottom to top, wherein the solid color layer and the gradient layer are generated according to a target color, the target color is determined according to a theme color of the target image, and transparency of the gradient layer gradually decreases from top to bottom. Such setting has the advantage that, the background image can be naturally transited from the target image to the solid color image area, while the personalized background image display requirement of the user is met, it is ensured that information such as the user identifier and the entry of the function that need to be displayed in the first presentation area is clear and visible, and the solid color layer and the gradient layer are generated according to the theme color of the target image uploaded by the user, which enables intelligent color change, and enhances immersion. The theme color can be understood as a color that plays a major role in a screen. The theme color of the image can be determined by a preset color-picking algorithm, which can include, for example, minimum difference, median cut, Octree, clustering, color modeling, and the like.

In some embodiments, the target color is determined by: obtaining the theme color of the target image; and performing dimming processing on a brightness component in the theme color to obtain the target color. Such setting has the advantage that after dimming processing is performed on the brightness component, a color tone is darkened, which facilitates clearly displaying the user identifier and the entry of the function.

Exemplarily, a magnitude of the dimming of the brightness component is not limited, and may be determined according to a current brightness value of the brightness component. For example, the dimming magnitude is directly proportional to the current brightness value. Optionally, a plurality of intervals are predefined, and the dimming magnitude is determined according to an interval where the current brightness value is located. For example, when the current brightness value is greater than or equal to a first preset brightness threshold, the dimming magnitude is a first brightness value; when the current brightness value is greater than or equal to a second preset brightness threshold and less than the first preset brightness threshold, the dimming magnitude is a second brightness value, the second brightness value being less than the first brightness value; and when the current brightness value is less than the second preset brightness threshold, the dimming magnitude is a third brightness value, the third brightness value being less than the second brightness value; optionally, the second brightness value is equal to the second preset brightness threshold, and the third brightness value is the current brightness value itself, that is, brightness after the dimming is 0.

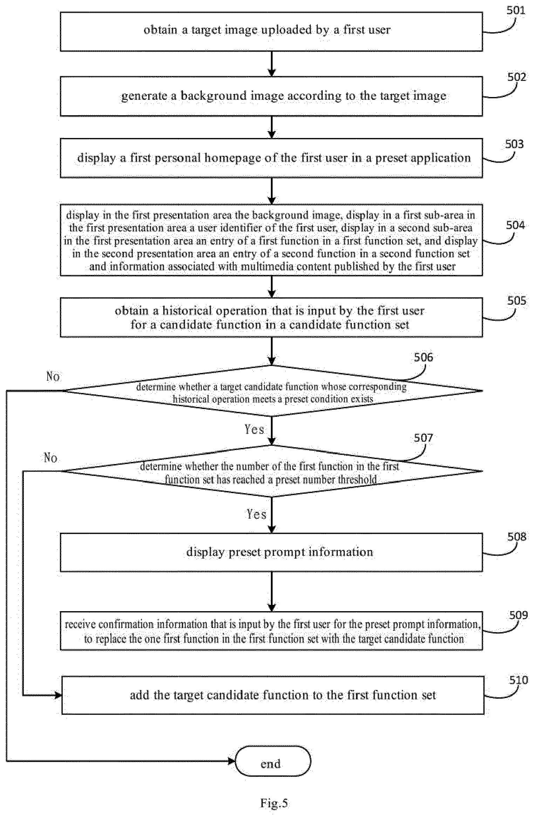

Fig. 5 is a schematic flow diagram of a page processing method according to an embodiment of the present disclosure, where refining is made on the basis of the optional solutions in the above embodiments, and illustratively, the method comprises the following steps:
step 501, obtaining a target image uploaded by a first user.

Exemplarily, a background image setting option may be provided for a user, so that when the option is triggered, an image locally selected by the user, a currently shot image, or an image selected from a template image set of a preset application may be received, and the received image may be determined as the target image.

Step 502, generating a background image according to the target image.

Exemplarily, the process of generating the background image may be locally completed by a preset application, or may be completed by a service end corresponding to the preset application.

As one implementation, the background image may be generated by: determining a theme color of the target image by using median cut, determining a target color according to the theme color, generating a solid color layer and a gradient layer according to the target color, and superposing the solid color layer, the target image, and the gradient layer in this order from bottom to top to compose the background image.

Optionally, the process of determining the theme color may comprise: projecting all pixels contained in the target image into one color space to form an RGB (red, green, and blue) cube, finding an edge with a longest color distribution in the cube, cutting from a position of a median to form 2 cubes with the same number of pixels, repeating the cutting step until 256 areas are obtained, selecting an area with a largest number of pixels, and determining an average pixel color in the area as the theme color.

Optionally, the process of determining the target color according to the theme color may comprise: converting a theme color of an RGB color space into an HSB (hue, saturation, and brightness) color space, keeping an H component and an S component unchanged, and performing tone-falling processing on a B component; the B component before the processing is denoted as B1 and the B component after the processing is denoted as B2. If B1 is greater than or equal to 80, then B2=B1-40; if B1 is greater than or equal to 20 and less than 80, then B2=B1-20; and if B1 is less than 20, then B2=0. After the dimming processing of the brightness, the HSB color space is converted into an RGB space to obtain the target color.

Optionally, the process of generating the solid color layer according to the target color may comprise: obtaining a solid color layer template, and performing color filling on the solid color layer template by using the target color to obtain the solid color layer. A size of the solid color layer template is consistent with that of the background image.

Optionally, the process of generating the gradient layer according to the target color may comprise: obtaining a gradient layer template, and by using the target color, performing linear gradient filling (for example, vertical Alpha channel gradient of 0 to 100) from top to bottom on the gradient layer template, that is, transparency gradually changes from 1 (complete transparency) to 0 (complete opacity) from top to bottom.

Step 503, displaying a first personal homepage of the first user in a preset application.

A currently logged in identity of the preset application is consistent with the first user, and the first personal homepage comprises a first presentation area and a second presentation area which do not overlap.

Step 504, displaying in the first presentation area the background image, displaying in a first sub-area in the first presentation area a user identifier of the first user, displaying in a second sub-area in the first presentation area an entry of a first function in a first function set, and displaying in the second presentation area an entry of a second function in a second function set and information associated with multimedia content published by the first user.

The first function set and the second function set do not overlap, the second sub-area is invisible to a second user when the second user accesses the first personal homepage, and the second user is different from the first user.

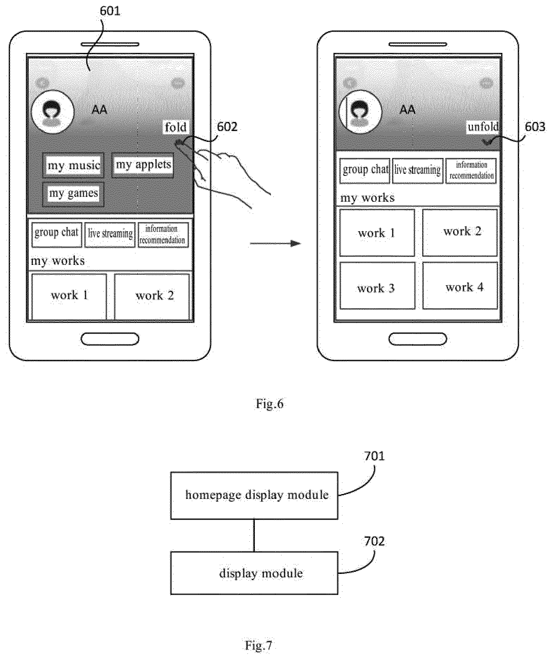

Fig. 6 is a schematic diagram of another first personal homepage according to an embodiment of the present disclosure, wherein as shown in Fig. 6, a background image 601 is displayed in a first presentation area, a user identifier of a first user and an entry of a first function are displayed on top of the background image 601, for example, the first function including my music, my applets, and my games, an entry of a second function and a cover image of a video published by the first user are displayed in a second presentation area, for example, the second function including group chat, live streaming, and information recommendation, the published video including a work 1 and a work 2, and more works can be browsed by inputting an operation such as swipe up on the first personal homepage.

Exemplarily, a fold control 602 is also shown in Fig. 6, so that after the first user clicks the fold control 602, the entry of the first function is hidden and the display area of a second sub-area is reduced to 0, and the fold control 602 may be replaced with an unfold control 603. Correspondingly, the display area of the first presentation area is reduced, and the reduced display area of the first presentation area is a difference between the display area of the original first presentation area and the display area of the second sub-area.

Step 505, obtaining a historical operation that is input by the first user for a candidate function in a candidate function set.

Step 506, determining whether a target candidate function whose corresponding historical operation meets a preset condition exists, and in response that the target candidate function whose corresponding historical operation meets a preset condition exists, executing step 507; in response that the target candidate function whose corresponding historical operation meets a preset condition does not exist, ending the flow.

Step 507, determining whether the number of the first functions in the first function set has reached a preset number threshold, and in response that the number of the first functions in the first function set has reached the preset number threshold, executing step 508; in response that the number of the first functions in the first function set has not reached the preset number threshold, executing step 510.

Exemplarily, as shown in Fig. 6, assuming that the preset number threshold is 4 and the number of current first functions is 3, if it is determined that a target candidate function that needs to be automatically added exists at present, step 510 of adding the target candidate function into the first function set may be executed, to display in the second sub-area an entry of the target candidate function; the time when the entry is displayed is not limited, for example, the entry may be displayed when the first user enters the first personal homepage next time, to avoid that refreshing the page while the page is browsed causes confusion to the first user. If the number of the current first functions has reached 4, preset prompt information can be displayed to inquire the first user whether he needs to replace the first function.

Step 508, displaying preset prompt information.

The preset prompt information is used for prompting the first user whether to replace one first function in the first function set with the target candidate function.

Step 509, receiving confirmation information that is input by the first user for the preset prompt information, to replace the one first function in the first function set with the target candidate function.

Step 510, adding the target candidate function to the first function set.

According to the page processing method provided in the embodiment of the present disclosure, a function invisible to others and a function visible to others are respectively displayed in different areas, which facilitates the user to quickly position a function the user wants to use when viewing his own personal homepage, thereby improving the operation efficiency; moreover, by displaying a user identifier of the user himself and the function invisible to others in a same area, and displaying the function visible to others and information associated with multimedia content published by the user himself in a same area, the function layout in the personal homepage is made more reasonable; for the first function set, a function can be intelligently added into the first function set according to a historical operation input by the user, which reduces user operations and enables intelligent management; by displaying a background image in the area for displaying the user identifier and an entry of the function invisible to others in the personal homepage, the background image is naturally transited from the target image to a solid color image area, thereby ensuring that the information such as the user identifier and the entry of the function that need to be displayed in the first presentation area is clear and visible while meeting the personalized background image display requirement of the user; a solid color layer and a gradient layer are generated according to a theme color of the target image uploaded by the user, which enables intelligent color change and enhances immersion.

Fig. 7 is a block diagram of a page processing apparatus according to an embodiment of the present disclosure, where the apparatus may be implemented by software and/or hardware, may be generally integrated in an electronic device, and may perform page processing by performing a page processing method. As shown in Fig. 7, the apparatus comprises:
a homepage display module 701 configured to display a first personal homepage of a first user in a preset application, wherein a currently logged in identity of the preset application is consistent with the first user, and the first personal homepage comprises a first presentation area and a second presentation area which do not overlap; and
a display module 702 configured to display in a first sub-area in the first presentation area a user identifier of the first user, display in a second sub-area in the first presentation area an entry of a first function in a first function set, display in the second presentation area information associated with multimedia content published by the first user and display an entry of a second function in a second function set, wherein the first function set and the second function set do not overlap, the second sub-area is invisible to a second user when the second user accesses the first personal homepage, and the second user is different from the first user.

In the page processing apparatus provided in the embodiment of the present disclosure, displaying a first personal homepage of a first user in a preset application, wherein a currently logged in identity of the preset application is consistent with the first user, and the first personal homepage comprises a first presentation area and a second presentation area which do not overlap; and displaying in a first sub-area in the first presentation area a user identifier of the first user, displaying in a second sub-area in the first presentation area an entry of a first function in a first function set, and displaying in the second presentation area an entry of a second function in a second function set, wherein the first function set and the second function set do not overlap, and the second sub-area is invisible to a second user when the second user accesses the first personal homepage. By use of the above technical solution, a function invisible to others and a function visible to others are respectively displayed in different areas, which facilitates the user to quickly position a function he wants to use when viewing his own personal homepage, so that the operation efficiency is improved, and by displaying the user identifier of the user and the function invisible to others in a same area, and displaying the information associated with the multimedia content published by the user and the function visible to others in a same area, clearer display division of the functions with different visibility is enabled, so that the function layout in the personal homepage is more reasonable.

Optionally, the apparatus further comprises: a function adding module configured to obtain a historical operation that is input by the first user for a candidate function in a candidate function set, and under the condition that a historical operation corresponding to a target candidate function meets a preset condition, add the target candidate function to the first function set.

Optionally, the adding the target candidate function to the first function set comprises: determining whether the number of the first functions in the first function set has reached a preset number threshold; in response that the number of the first functions in the first function set has reached the preset number threshold, displaying preset prompt information, wherein the preset prompt information is used for prompting the first user whether to replace one first function in the first function set with the target candidate function; and receiving confirmation information that is input by the first user for the preset prompt information, to replace the one first function in the first function set with the target candidate function.

Optionally, the apparatus further comprises: a display adjustment module configured to, in response to a folding operation for the second sub-area that is input by the first user, hide the entry of the first function and reduce a display area of the second sub-area, and display an unfold control corresponding to the second sub-area, the unfold control being used for inputting an unfolding operation for the second sub-area.

Optionally, the display module is further configured to: display in the first presentation area a background image, wherein the background image is determined according to a target image uploaded by the first user, a display area of the target image being less than that of the background image, a color of a display area other than the target image in the background image being matched with that of the target image, and the display area of the target image and the second sub-area not overlapping.

Optionally, the background image comprises a solid color layer, the target image and a gradient layer with consistent widths and overlapping upper boundaries that are superimposed in this order from bottom to top, wherein the solid color layer and the gradient layer are generated according to a target color, the target color is determined according to a theme color of the target image, and transparency of the gradient layer gradually decreases from top to bottom.

Optionally, the target color is determined by: obtaining the theme color of the target image; and performing dimming processing on a brightness component in the theme color to obtain the target color.

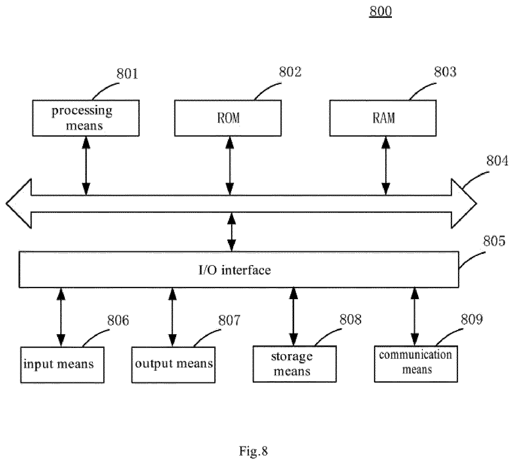

Hereinafter, reference is made to Fig. 8, which shows a schematic structural diagram of an electronic device 800 suitable for implementing the embodiments of the present disclosure. The electronic device in the embodiment of the present disclosure may include, but is not limited to, a mobile terminal such as a mobile phone, a laptop computer, a digital broadcast receiver, a personal digital assistant (PDA), a tablet computer (PAD), a portable multimedia player (PMP), and a vehicle-mounted terminal (e.g., vehicle-mounted navigation terminal), and a fixed terminal such as a digital television (digital TV), and a desktop computer. The electronic device shown in Fig. 8 is only an example, so that it should not bring any limitation to the functions and the scope of use of the embodiments of the present disclosure.

As shown in Fig. 8, the electronic device 800 may include a processing means (e.g., central processing unit, graphics processing unit, etc.) 801 that may perform various appropriate actions and processes according to a program stored in a read-only memory (ROM) 802 or a program loaded from a storage means 808 into a random access memory (RAM) 803. In the RAM 803, various programs and data necessary for the operation of the electronic device 800 are also stored. The processing means 801, the ROM 802, and the RAM 803 are connected with each other by a bus 804. An input/output (I/O) interface 805 is also connected to the bus 804.

Generally, the following means may be connected to the I/O interface 805: an input means 806 including, for example, a touch screen, touch pad, keyboard, mouse, camera, microphone, accelerometer, gyroscope, or the like; an output means 807 including, for example, a liquid crystal display (LCD), speaker, vibrator, or the like; the storage means 808 including, for example, a magnetic tape, hard disk, or the like; and a communication means 809. The communication means 809 may allow the electronic device 800 to communicate wirelessly or by wire with other devices to exchange data. While Fig. 8 illustrates the electronic device 800 having various means, it should be understood that not all illustrated means are required to be implemented or provided. More or fewer means may be alternatively implemented or provided.

In particular, according to the embodiment of the present disclosure, the processes described above with reference to the flow diagrams may be implemented as a computer software program. For example, the embodiment of the present disclosure comprises a computer program product, the computer program product comprising a computer program carried on a non-transitory computer-readable medium, the computer program containing program code for performing the method illustrated by the flow diagrams. In such an embodiment, the computer program may be downloaded and installed from a network via the communication means 809, or installed from the storage means 808, or installed from the ROM 802. The computer program, when executed by the processing means 801, performs the above functions defined in the method of the embodiments of the present disclosure.

It should be noted that the above computer-readable medium of the present disclosure may be a computer-readable signal medium or a computer-readable storage medium or any combination of the above two. The computer-readable storage medium may be, for example, but is not limited to, an electronic, magnetic, optical, electromagnetic, infrared, or semiconductor system, apparatus, or device, or any combination of the foregoing. More specific examples of the computer-readable storage medium may include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium containing or storing a program, wherein the program can be used by or in conjunction with an instruction execution system, apparatus, or device. However, in the present disclosure, the computer-readable signal medium may include a data signal propagated in baseband or as part of a carrier wave, in which computer-readable program code is carried. Such a propagated data signal may take a variety of forms, including, but not limited to, an electromagnetic signal, optical signal, or any suitable combination of the forgoing. The computer-readable signal medium may also be any computer-readable medium other than the computer-readable storage medium, wherein the computer-readable signal medium can send, propagate, or transmit a program for use by or in conjunction with an instruction execution system, apparatus, or device. The program code contained on the computer-readable medium may be transmitted using any appropriate medium, including but not limited to: a wire, an optical cable, Radio Frequency (RF), etc., or any suitable combination of the foregoing.

The above computer-readable medium may be contained in the above electronic device; or may be exist separately without being assembled into the electronic device.

The above computer-readable medium has at least one programs carried thereon, wherein the above at least one programs, when executed by the electronic device, cause the electronic device to: display a first personal homepage of a first user in a preset application, wherein the currently logged in identity of the preset application is consistent with the first user, and the first personal homepage comprises a first presentation area and a second presentation area which do not overlap; display in a first sub-area in the first presentation area a user identifier of the first user, display in a second sub-area in the first presentation area an entry of a first function in a first function set, display in the second presentation area information associated with multimedia content published by the first user and display an entry of a second function in a second function set, wherein the first function set and the second function set do not overlap, the second sub-area is invisible to a second user when the second user accesses the first personal homepage, and the second user is different from the first user.

Computer program code for performing the operation of the present disclosure may be written in at least one programming languages or a combination thereof, wherein the above programming language includes but is not limited to an obj ect-oriented programming language such as Java, Smalltalk, and C++, and also includes a conventional procedural programming language, such as the "C" programming language or a similar programming language. The program code may be executed entirely on a user's computer, partly on the user's computer, as a stand-alone software package, partly on the user's computer and partly on a remote computer, or entirely on the remote computer or a server. In a scenario where the remote computer is involved, the remote computer may be connected to the user's computer through any type of network, including a local area network (LAN) or a wide area network (WAN), or may be connected to an external computer (for example, through the Internet using an Internet service provider).

The flow diagrams and block diagrams in the drawings illustrate the possibly implemented architecture, functions, and operations of the system, method and computer program product according to various embodiments of the present disclosure. In this regard, each block in the flow diagrams or block diagrams may represent a module, program segment, or portion of code, which includes at least one executable instructions for implementing a specified logical function. It should also be noted that, in some alternative implementations, functions noted in blocks may occur in a different order from those noted in the drawings. For example, two blocks shown in succession may, in fact, be executed substantially concurrently, or the blocks may sometimes be executed in a reverse order, which depends upon the functions involved. It will also be noted that each block in the block diagrams and/or flow diagrams, and a combination of the blocks in the block diagrams and/or flow diagrams, can be implemented by a special-purpose hardware-based system that performs specified functions or operations, or a combination of special-purpose hardware and computer instructions.

The involved module described in the embodiments of the present disclosure may be implemented by software or hardware. The name of the module does not, in some cases, constitute a limitation on the module itself. For example, the homepage display module may be further described as "a module configured to display a first personal homepage of a first user in a preset application, wherein a currently logged in identity of the preset application is consistent with the first user, and the first personal homepage comprises a first presentation area and a second presentation area which do not overlap".

The functions described above herein may be executed, at least partially, by at least one hardware logic components. For example, without limitation, exemplary types of the hardware logic component that may be used include: a field programmable gate array (FPGA), application specific integrated circuit (ASIC), application specific standard product (ASSP), system on chip (SOC), complex programmable logic device (CPLD), and the like.

In the context of this disclosure, a machine-readable medium may be a tangible medium, which can contain, or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on at least one wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

According to at least one embodiments of the present disclosure, there is provided a page processing method, comprising:
displaying a first personal homepage of a first user in a preset application, wherein a currently logged in identity of the preset application is consistent with the first user, and the first personal homepage comprises a first presentation area and a second presentation area which do not overlap; and
displaying in a first sub-area in the first presentation area a user identifier of the first user, displaying in a second sub-area in the first presentation area an entry of a first function in a first function set, displaying in the second presentation area information associated with multimedia content published by the first user and displaying an entry of a second function in a second function set, wherein the first function set and the second function set do not overlap, the second sub-area is invisible to a second user when the second user accesses the first personal homepage, and the second user is different from the first user.

Optionally, the method also comprises: obtaining a historical operation that is input by the first user for a candidate function in a candidate function set, and under the condition that a historical operation corresponding to a target candidate function meets a preset condition, adding the target candidate function to the first function set.

Optionally, the adding the target candidate function to the first function set comprises:
determining whether the number of the first functions in the first function set has reached a preset number threshold;
in response that the number of the first functions in the first function set has reached the preset number threshold, displaying preset prompt information, wherein the preset prompt information is used for prompting the first user whether to replace one first function in the first function set with the target candidate function; and
receiving confirmation information that is input by the first user for the preset prompt information, to replace the one first function in the first function set with the target candidate function.

Optionally, the method also comprises: in response to a folding operation for the second sub-area that is input by the first user, hiding the entry of the first function and reducing a display area of the second sub-area, and displaying an unfold control corresponding to the second sub-area, the unfold control being used for inputting an unfolding operation for the second sub-area.

Optionally, a background image is displayed in the first presentation area, wherein the background image is determined according to a target image uploaded by the first user, a display area of the target image being less than that of the background image, a color of a display area other than the target image in the background image being matched with that of the target image, and the display area of the target image and the second sub-area not overlapping.

Optionally, the background image comprises a solid color layer, the target image, and a gradient layer with consistent widths and overlapping upper boundaries that are superposed in this order from bottom to top, wherein the solid color layer and the gradient layer are generated according to a target color, the target color is determined according to a theme color of the target image, and transparency of the gradient layer gradually decreases from top to bottom.

Optionally, the target color is determined by:
obtaining the theme color of the target image; and
performing dimming processing on a brightness component in the theme color to obtain the target color.

According to at least one embodiment of the present disclosure, there is provided a page processing apparatus, comprising:
a homepage display module configured to display a first personal homepage of a first user in a preset application, wherein a currently logged in identity of the preset application is consistent with the first user, and the first personal homepage comprises a first presentation area and a second presentation area which do not overlap; and
a display module configured to display in a first sub-area in the first presentation area a user identifier of the first user, display in a second sub-area in the first presentation area an entry of a first function in a first function set, display in the second presentation area information associated with multimedia content published by the first user and display an entry of a second function in a second function set, wherein the first function set and the second function set do not overlap, the second sub-area is invisible to a second user when the second user accesses the first personal homepage, and the second user is different from the first user.

Furthermore, while operations are depicted in a specific order, this should not be understood as requiring that these operations be performed in the specific order shown or in a sequential order. Under certain circumstances, multitasking and parallel processing might be advantageous. Similarly, while several specific implementation details are included in the above discussion, these should not be construed as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

## Claims

1. A page processing method, comprising:
displaying a first personal homepage of a first user in a preset application, wherein a currently logged in identity of the preset application is consistent with the first user, and the first personal homepage comprises a first presentation area and a second presentation area which do not overlap; and
displaying in a first sub-area in the first presentation area a user identifier of the first user, displaying in a second sub-area in the first presentation area an entry of a first function in a first function set, displaying in the second presentation area information associated with multimedia content published by the first user and displaying an entry of a second function in a second function set, wherein the first function set and the second function set do not overlap, the second sub-area is invisible to a second user when the second user accesses the first personal homepage, and the second user is different from the first user.

2. The method according to claim 1, further comprising:
obtaining a historical operation that is input by the first user for a candidate function in a candidate function set, and under the condition that a historical operation corresponding to a target candidate function meets a preset condition, adding the target candidate function to the first function set.

3. The method according to claim 2, wherein the adding the target candidate function to the first function set comprises:
determining whether the number of the first functions in the first function set has reached a preset number threshold;
in response that the number of the first functions in the first function set has reached the preset number threshold, displaying preset prompt information, wherein the preset prompt information is used for prompting the first user whether to replace one first function in the first function set with the target candidate function; and
receiving confirmation information that is input by the first user for the preset prompt information, to replace the one first function in the first function set with the target candidate function.

4. The method according to claim 1, further comprising:
in response to a folding operation for the second sub-area that is input by the first user, hiding the entry of the second function and reducing a display area of the second sub-area, and displaying an unfold control corresponding to the second sub-area, the unfold control being used for inputting an unfolding operation for the second sub-area.

5. The method according to claim 1, further comprising: displaying in the first presentation area a background image,
wherein the background image is determined according to a target image uploaded by the first user, a display area of the target image being less than that of the background image, a color of a display area other than the target image in the background image being matched with that of the target image, and the display area of the target image and the second sub-area not overlapping.

6. The method according to claim 5, wherein the background image comprises a solid color layer, the target image, and a gradient layer with consistent widths and overlapping upper boundaries that are superposed in this order from bottom to top,
wherein the solid color layer and the gradient layer are generated according to a target color, the target color is determined according to a theme color of the target image, and transparency of the gradient layer gradually decreases from top to bottom.

7. The method according to claim 6, wherein the target color is determined by:
obtaining the theme color of the target image; and
performing dimming processing on a brightness component in the theme color to obtain the target color.

8. A page processing apparatus, comprising:
a homepage display module configured to display a first personal homepage of a first user in a preset application, wherein a currently logged in identity of the preset application is consistent with the first user, and the first personal homepage comprises a first presentation area and a second presentation area which do not overlap; and
a display module configured to display in a first sub-area in the first presentation area a user identifier of the first user, display in a second sub-area in the first presentation area an entry of a first function in a first function set, display in the second presentation area information associated with multimedia content published by the first user and display an entry of a second function in a second function set, wherein the first function set and the second function set do not overlap, the second sub-area is invisible to a second user when the second user accesses the first personal homepage, and the second user is different from the first user.

9. An electronic device comprising a memory, a processor, and a computer program stored on the memory and executable on the processor, wherein the processor, when executing the computer program, implements the method according to any of claims 1 to 7.

10. A computer-readable storage medium having a computer program stored thereon, the program, when executed by a processor, implements the method according to any of claims 1 to 7.
